# EUROPEAN PATENT APPLICATION

(11) **EP 3 896 648 A1**
(43) Date of publication of application: **20.10.2021**
(21) Application number: 19896497.5
(22) Date of filing: 29.10.2019
(51) Int. Cl.: G06T 7/00

(54) **MINI-BATCH LEARNING DEVICE, AND OPERATION PROGRAM AND OPERATION METHOD THEREFOR**

(30) Priority: 14.12.2018 JP 2018234883
(71) Applicant: FUJIFILM Corporation, Tokyo 106-8620 (JP)
(72) Inventor: WAKUI, Takashi, Ashigarakami-gun, Kanagawa 258-8538 (JP)
(74) Representative: Klunker IP Patentanwälte PartG mbB
(86) International application number: PCT/JP2019/042385
(87) International publication number: WO 2020/121668

(57) **Abstract**

There is provided a mini-batch learning apparatus that learns a machine learning model for performing semantic segmentation, which determines a plurality of classes in an image in units of pixels, by inputting mini-batch data to the machine learning model, the apparatus including a calculation unit, a specifying unit, and a generation unit. The calculation unit calculates, from a learning input image and an annotation image which are sources of the mini-batch data, a first area ratio of each of the plurality of classes with respect to an entire area of the annotation image. The specifying unit specifies a rare class of which the first area ratio is lower than a first setting value. The generation unit generates the mini-batch data from the learning input image and the annotation image. The generation unit generates the mini-batch data in which a second area ratio of the rare class is equal to or higher than a second setting value higher than the first area ratio calculated by the calculation unit.

## Description

### BACKGROUND OF THE INVENTION

### 1. Field of the Invention

The technique of the present disclosure relates to a mini-batch learning apparatus, an operation program of the mini-batch learning apparatus, and an operation method of the mini-batch learning apparatus.

### 2. Description of the Related Art

There is known semantic segmentation which determines a plurality of classes in an image in units of pixels. The semantic segmentation is realized by a machine learning model (hereinafter, simply referred to as a model) such as a U-shaped convolutional neural network (U-Net, U-shaped neural network).

In order to improve a determination accuracy of the model, it is necessary to update the model by inputting learning data to the model and learning the learning data. The learning data includes a learning input image and an annotation image in which a class in the learning input image is manually designated. In JP2017-107386A, from a plurality of learning input images, one learning input image which is a source of the annotation image is extracted.

### SUMMARY OF THE INVENTION

For learning, there is a method called mini-batch learning. In mini-batch learning, as learning data, mini-batch data is input to the model. The mini-batch data includes some divided images (100 divided images) among a plurality of divided images obtained by dividing the learning input image and the annotation image (for example, 10000 divided images obtained by dividing an original image by a frame having a size of 1/100 of the size of the original image). A plurality of sets (for example, 100 sets) of the mini-batch data are generated, and each set is sequentially input to the model.

Here, a case where there is a class bias in the learning input image and the annotation image is considered. For example, the learning input image is an image obtained by capturing a state of cell culture by a phase contrast microscope. In the learning input image, differentiated cells are classified as a class 1, undifferentiated cells are classified as a class 2, a medium is classified as a class 3, and dead cells are classified as a class 4. In area ratios of classes in the entire learning input image and the entire annotation image, an area ratio of the differentiated cells is 38%, an area ratio of the undifferentiated cells is 2%, an area ratio of the medium is 40%, and an area ratio of the dead cells is 20%, and the area ratio of the undifferentiated cells is relatively low.

In a case where there is a class bias in the learning input image and the annotation image in this way, it is likely that there is also a class bias in the mini-batch data including the learning input image and the annotation image. In a case where there is a class bias in the mini-batch data, learning is performed without taking into account a rare class of which the area ratio is relatively low. As a result, a model with a low rare class determination accuracy is obtained.

In JP2017-107386A, as described above, from the plurality of learning input images, one learning input image which is a source of the annotation image is extracted. However, in this method, in a case where there is a class bias in all of the plurality of learning input images, a model with a low rare class determination accuracy is obtained in the end. As a result, the method described in JP2017-107386A cannot solve the problem that a model with a low rare class determination accuracy is obtained.

An object of the technique of the present disclosure is to provide a mini-batch learning apparatus capable of preventing a decrease in a class determination accuracy of a machine learning model for performing semantic segmentation, an operation program of the mini-batch learning apparatus, and an operation method of the mini-batch learning apparatus.

In order to achieve the object, according to the present disclosure, there is provided a mini-batch learning apparatus that learns a machine learning model for performing semantic segmentation, which determines a plurality of classes in an image in units of pixels, by inputting mini-batch data to the machine learning model, the apparatus including: a calculation unit that calculates, from a learning input image and an annotation image which are sources of the mini-batch data, a first area ratio of each of the plurality of classes with respect to an entire area of the annotation image; a specifying unit that specifies a rare class of which the first area ratio is lower than a first setting value; and a generation unit that generates the mini-batch data from the learning input image and the annotation image, the mini-batch data being mini-batch data in which a second area ratio of the rare class is equal to or higher than a second setting value higher than the first area ratio calculated by the calculation unit.

Preferably, the mini-batch learning apparatus further includes a reception unit that receives a selection instruction as to whether or not to cause the generation unit to perform processing of generating the mini-batch data in which the second area ratio is equal to or higher than the second setting value.

Preferably, the generation unit generates a plurality of pieces of the mini-batch data according to a certain rule, and selects, among the plurality of pieces of the mini-batch data generated according to the certain rule, the mini-batch data in which the second area ratio is equal to or higher than the second setting value, for use in the learning.

Preferably, the generation unit detects a bias region and a non-bias region of the rare class in the annotation image, and sets the number of cut-outs of an image which is a source of the mini-batch data in the bias region to be larger than the number of cut-outs of the image in the non-bias region.

According to the present disclosure, there is provided an operation program of a mini-batch learning apparatus that learns a machine learning model for performing semantic segmentation, which determines a plurality of classes in an image in units of pixels, by inputting mini-batch data to the machine learning model, the program causing a computer to function as: a calculation unit that calculates, from a learning input image and an annotation image which are sources of the mini-batch data, a first area ratio of each of the plurality of classes with respect to an entire area of the annotation image; a specifying unit that specifies a rare class of which the first area ratio is lower than a first setting value; and a generation unit that generates the mini-batch data from the learning input image and the annotation image, the mini-batch data being mini-batch data in which a second area ratio of the rare class is equal to or higher than a second setting value higher than the first area ratio calculated by the calculation unit.

According to the present disclosure, there is provided an operation method of a mini-batch learning apparatus that learns a machine learning model for performing semantic segmentation, which determines a plurality of classes in an image in units of pixels, by inputting mini-batch data to the machine learning model, the method including: a calculation step of calculating, from a learning input image and an annotation image which are sources of the mini-batch data, a first area ratio of each of the plurality of classes with respect to an entire area of the annotation image; a specifying step of specifying a rare class of which the first area ratio is lower than a first setting value; and a generation step of generating the mini-batch data from the learning input image and the annotation image, the mini-batch data being mini-batch data in which a second area ratio of the rare class is equal to or higher than a second setting value higher than the first area ratio calculated in the calculation step.

According to the technique of the present disclosure, it is possible to provide a mini-batch learning apparatus capable of preventing a decrease in a class determination accuracy of a machine learning model for performing semantic segmentation, an operation program of the mini-batch learning apparatus, and an operation method of the mini-batch learning apparatus.

### BRIEF DESCRIPTION OF THE DRAWINGS

Fig. 1 is a diagram illustrating a mini-batch learning apparatus and an outline of processing of the mini-batch learning apparatus.
Fig. 2 is a diagram illustrating an operating apparatus and an outline of processing of the operating apparatus.
Fig. 3 is a diagram illustrating images, (a) of Fig. 3 illustrates a learning input image, and (b) of Fig. 3 illustrates an annotation image.
Fig. 4 is a diagram illustrating how a divided learning input image is generated from a learning input image.
Fig. 5 is a diagram illustrating how a divided annotation image is generated from an annotation image.
Fig. 6 is a diagram illustrating that a divided learning input image group includes some of a plurality of divided learning input images.
Fig. 7 is a diagram illustrating that a divided annotation image group includes some of a plurality of divided annotation images.
Fig. 8 is a block diagram illustrating a computer including the mini-batch learning apparatus.
Fig. 9 is a block diagram illustrating a processing unit of a CPU of the mini-batch learning apparatus.
Fig. 10 is a diagram illustrating a specific example of processing of a calculation unit and a specifying unit.
Fig. 11 is a diagram illustrating a specific example of processing of a generation unit.
Fig. 12 is a flowchart illustrating a processing procedure of the mini-batch learning apparatus.
Fig. 13 is a diagram illustrating a second embodiment for inquiring whether or not to cause the generation unit to perform processing of generating mini-batch data in which a second area ratio is equal to or higher than a second setting value.
Fig. 14 is a diagram illustrating a third embodiment for selecting, among a plurality of pieces of the mini-batch data generated according to a certain rule, the mini-batch data in which the second area ratio is equal to or higher than the second setting value, for use in learning.
Fig. 15 is a diagram illustrating a fourth embodiment for setting the number of cut-outs of an image which is a source of the mini-batch data in a bias region of a rare class in the annotation image to be larger than the number of cut-outs of the image in a non-bias region of the rare class.

### DESCRIPTION OF THE PREFERRED EMBODIMENTS

### [First Embodiment]

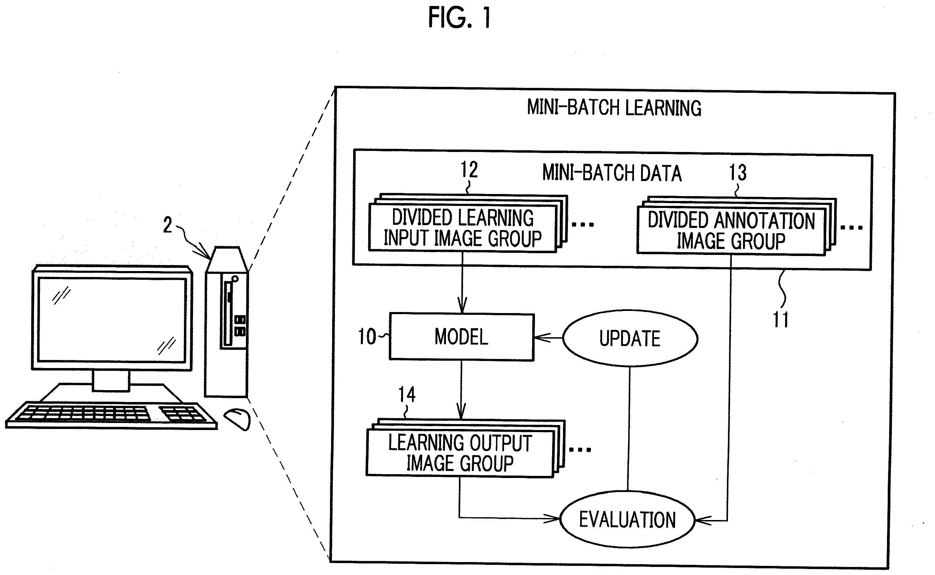

In Fig. 1, in order to improve a determination accuracy of a model 10 for performing semantic segmentation, which determines a plurality of classes in an input image in units of pixels, a mini-batch learning apparatus 2 performs mini-batch learning by inputting mini-batch data 11 to the model 10. The mini-batch learning apparatus 2 is, for example, a desktop personal computer. Further, the model 10 is, for example, U-Net.

The class may be referred to as a type of an object that appears in the input image. Further, in short, the semantic segmentation is a technique of determining a class and a contour of an object appearing in an input image, and the model 10 outputs a determination result as an output image. For example, in a case where three objects of a cup, a book, and a mobile phone appear in an input image, in an output image, ideally, each of the cup, the book, and the mobile phone is determined as a class, and contour lines that faithfully trace contours of these objects are drawn on each object.

By inputting the learning data to the model 10, learning the learning data, and updating the model 10, the class determination accuracy of the model 10 is improved. The learning data includes a pair of a learning input image which is to be input to the model 10 and an annotation image in which a class in the learning input image is manually designated. The annotation image is a correct answer image for matching an answer with a learning output image, which is output from the model 10 in accordance with the learning input image, and is compared with the learning output image. As the class determination accuracy of the model 10 is higher, a difference between the annotation image and the learning output image is smaller.

As described above, the mini-batch learning apparatus 2 uses mini-batch data 11 as the learning data. The mini-batch data 11 includes a divided learning input image group 12 and a divided annotation image group 13.

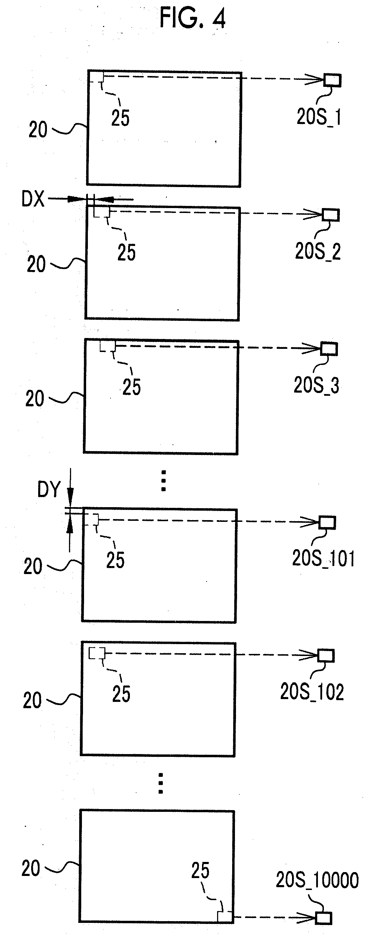

In mini-batch learning, the divided learning input image group 12 is input to the model 10. Thereby, a learning output image is output from the model 10 for each divided learning input image 20S (refer to Fig. 4) of the divided learning input image group 12. The learning output image group 14, which is a set of learning output images output from the model 10 in this way, is compared with the divided annotation image group 13, and thus a class determination accuracy of the model 10 is evaluated. The model 10 is updated according to an evaluation result of the class determination accuracy. The mini-batch learning apparatus 2 inputs the divided learning input image group 12 to the model 10, outputs the learning output image group 14 from the model 10, evaluates the class determination accuracy of the model 10, and updates the model 10 while changing the mini-batch data 11. The processing is repeated until the class determination accuracy of the model 10 reaches a desired level.

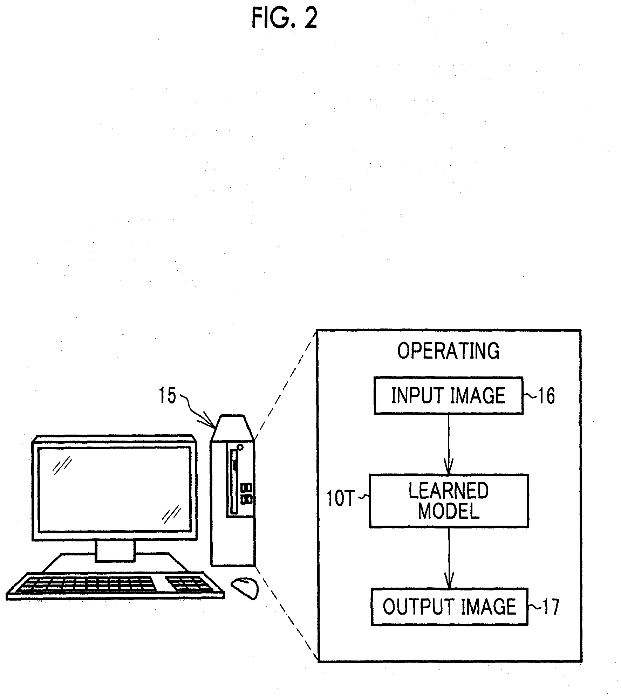

As illustrated in Fig. 2, the model 10 in which the class determination accuracy is raised to a desired level as described above is incorporated into an operating apparatus 15, as a learned machine learning model 10T (hereinafter, referred to as a learned model). An input image 16 in which a class and a contour of an appeared object are not yet determined is input to the learned model 10T. The learned model 10T determines a class and a contour of an object appeared in the input image 16, and outputs an output image 17 as a determination result. Similar to the mini-batch learning apparatus 2, the operating apparatus 15 is, for example, a desktop personal computer, and displays an input image 16 and an output image 17 side by side on a display. The operating apparatus 15 may be an apparatus different from the mini-batch learning apparatus 2 or the same apparatus as the mini-batch learning apparatus 2. Further, even after the learned model 10T is incorporated into the operating apparatus 15, the learned model 10T may be learned by inputting the mini-batch data 11 to the learned model 10T.

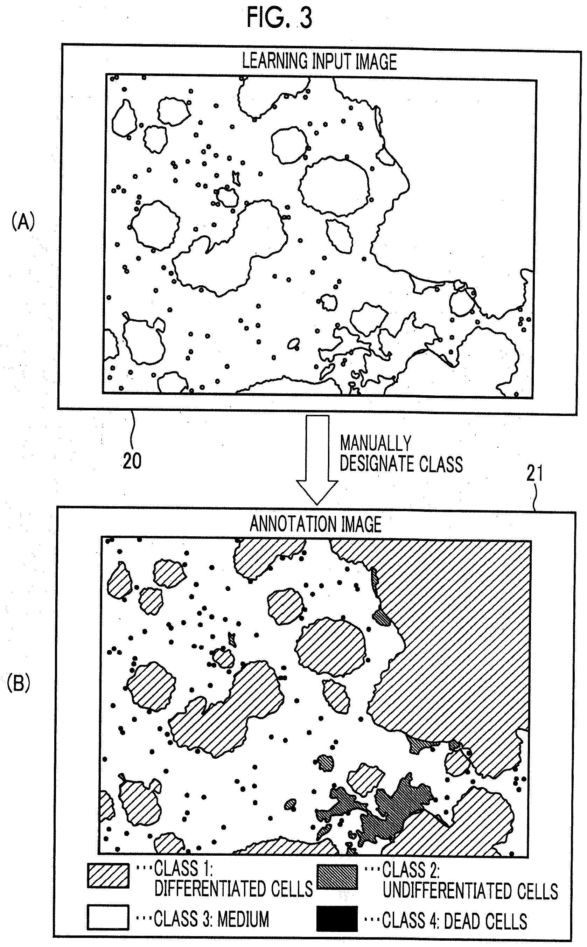

As illustrated in (a) of Fig. 3, in this example, the learning input image 20 is one image obtained by capturing a state of cell culture by a phase contrast microscope. In the learning input image 20, differentiated cells, undifferentiated cells, a medium, and dead cells appear as objects. In this case, as illustrated in (b) of Fig. 3, in an annotation image 21, class-1 differentiated cells, class-2 undifferentiated cells, a class-3 medium, and class-4 dead cells are respectively and manually designated. The input image 16 which is input to the learned model 10T is also an image obtained by capturing a state of cell culture by a phase contrast microscope, similar to the learning input image 20.

As illustrated in Fig. 4, the divided learning input image 20S is obtained by cutting out a region surrounded by a rectangular frame 25, which is sequentially moved by DX in a horizontal direction and by DY in a vertical direction in the learning input image 20, each time. The movement amount DX of the frame 25 in the horizontal direction is, for example, 1/2 of a size of the frame 25 in the horizontal direction. Similarly, the movement amount DY of the frame 25 in the vertical direction is, for example, 1/2 of a size of the frame 25 in the vertical direction. A size of the frame 25 is, for example, 1/50 of the size of the learning input image 20. In this case, the divided learning input images 20S include a total of 10000 divided learning input images 20S_1 to 20S_10000.

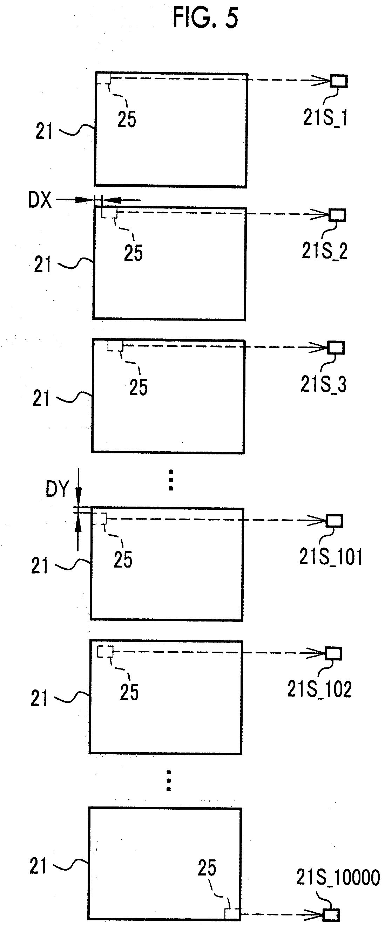

Similarly, as illustrated in Fig. 5, the divided annotation image 21S is obtained by cutting out a region surrounded by a rectangular frame 25, which is sequentially moved by DX in the horizontal direction and by DY in the vertical direction in the annotation image 21, each time. In this case, the divided annotation images 21S include a total of 10000 divided annotation images 21S_1 to 21S_10000. In the following, it is assumed that the learning input image 20 and the annotation image 21 are already prepared in the mini-batch learning apparatus 2, and that the divided learning input images 20S and the divided annotation images 21S are already generated.

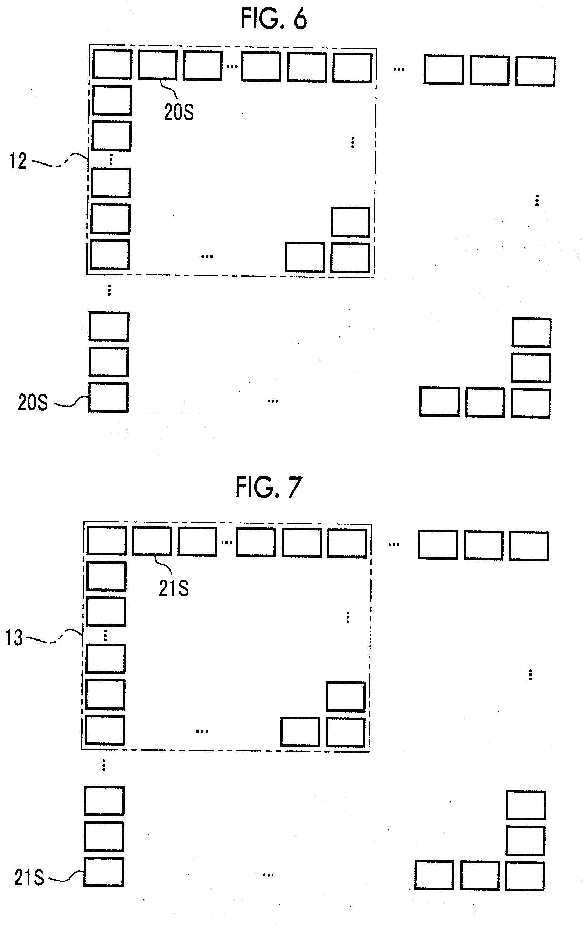

As illustrated in Fig. 6, the divided learning input image group 12 includes some divided learning input images 20S among the plurality of divided learning input images 20S generated as illustrated in Fig. 4 (for example, 100 divided learning input images 20S among 10000 divided learning input images 20S). Similarly, as illustrated in Fig. 7, the divided annotation image group 13 includes some divided annotation images 21S among the plurality of divided annotation images 21S generated as illustrated in Fig. 5 (for example, 100 divided annotation images 21S among 10000 divided annotation images 21S). The divided learning input image 20S included in the divided learning input image group 12 and the divided annotation image 21S included in the divided annotation image group 13 have the same region which is cut out by the frame 25.

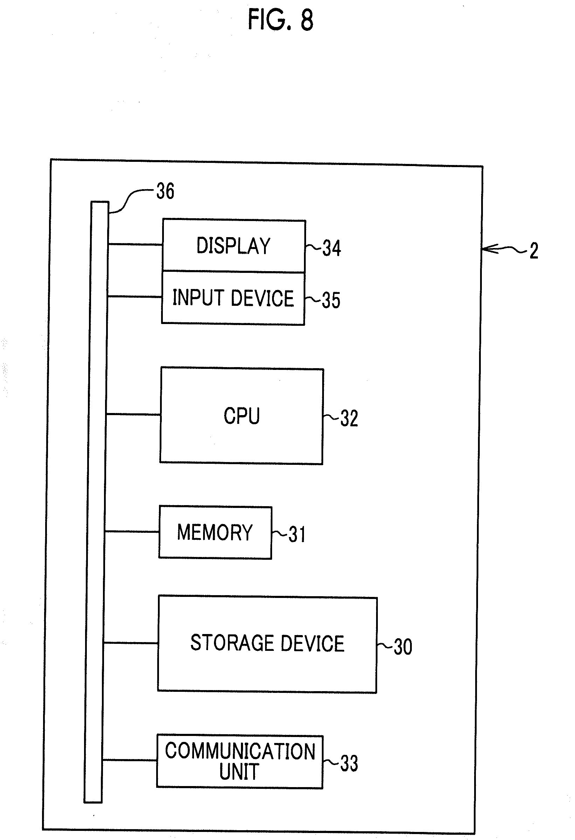

In Fig. 8, a computer including the mini-batch learning apparatus 2 includes a storage device 30, a memory 31, a central processing unit (CPU) 32, a communication unit 33, a display 34, and an input device 35. The components are connected to each other via a data bus 36.

The storage device 30 is a hard disk drive that is built in the computer including the mini-batch learning apparatus 2 or is connected via a cable and a network. Alternatively, the storage device 30 is a disk array in which a plurality of hard disk drives are connected in series. The storage device 30 stores a control program such as an operating system, various application programs, and various data associated with the programs. A solid state drive may be used instead of the hard disk drive.

The memory 31 is a work memory which is necessary to execute processing by the CPU 32. The CPU 32 loads the program stored in the storage device 30 into the memory 31, and collectively controls each unit of the computer by executing processing according to the program.

The communication unit 33 is a network interface that controls transmission of various information via a network such as a wide area network (WAN), for example, the Internet or a public communication network. The display 34 displays various screens. The various screens include operation functions by a graphical user interface (GUI). The computer including the mini-batch learning apparatus 2 receives an input of an operation instruction from the input device 35 via the various screens. The input device 35 includes a keyboard, a mouse, a touch panel, and the like.

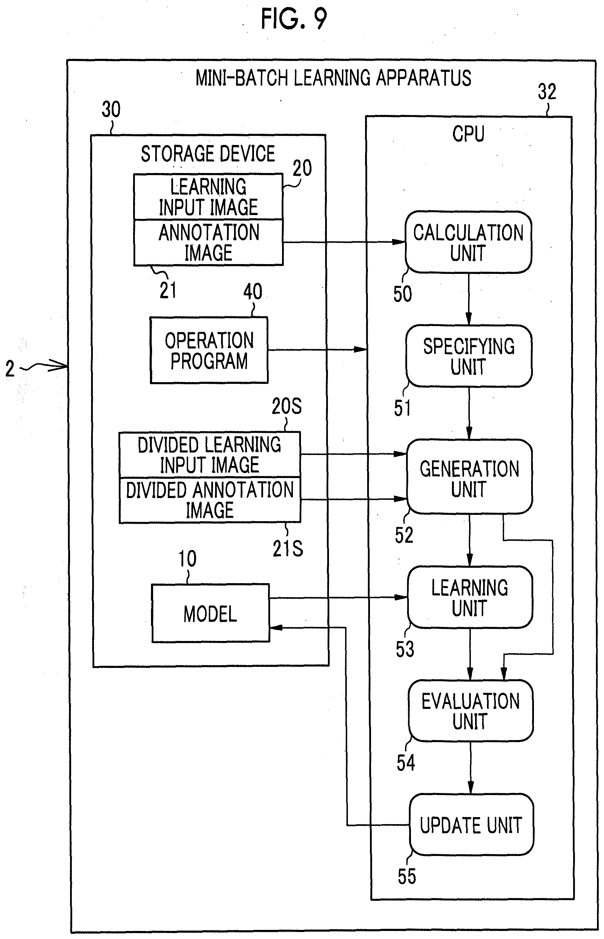

In Fig. 9, the storage device 30 stores the learning input image 20, the annotation image 21, the divided learning input images 20S, the divided annotation images 21S, and the model 10. Further, the storage device 30 stores an operation program 40 as an application program. The operation program 40 is an application program for operating the computer as the mini-batch learning apparatus 2. That is, the operation program 40 is an example of "the operation program of the mini-batch learning apparatus" according to the technique of the present disclosure.

In a case where the operation program 40 is started, the CPU 32 of the computer including the mini-batch learning apparatus 2 functions as a calculation unit 50, a specifying unit 51, a generation unit 52, a learning unit 53, an evaluation unit 54, and an update unit 55, in cooperation with the memory 31.

The calculation unit 50 calculates a first area ratio of each of the plurality of classes with respect to an area of the entire annotation image 21. More specifically, the calculation unit 50 reads the annotation image 21 from the storage device 30. The calculation unit 50 adds, for each class, the number of pixels of regions, which are manually designated in the annotation image 21. Next, the calculation unit 50 calculates a first area ratio by dividing the added number of pixels by the total number of pixels of the annotation image 21. For example, in a case where the added number of pixels of the regions designated as the class-1 differentiated cells is 10000 and the total number of pixels is 50000, the first area ratio of the class-1 differentiated cells is (10000/50000)×100=20%. The calculation unit 50 outputs the calculated first area ratio to the specifying unit 51.

The specifying unit 51 specifies a rare class of which the first area ratio is lower than a first setting value. The specifying unit 51 outputs the specified rare class to the generation unit 52.

The generation unit 52 generates the mini-batch data 11 by selecting, as illustrated in Figs. 6 and 7, some images from the divided learning input images 20S and the divided annotation images 21S generated from the learning input image 20 and the annotation image 21 illustrated in Figs. 4 and 5. The generation unit 52 generates a plurality of sets (for example, 100 sets) of the mini-batch data 11. In a case where the rare class is specified by the specifying unit 51, the generation unit 52 generates the mini-batch data 11 in which a second area ratio is equal to or higher than a second setting value higher than the first area ratio by designating a method of selecting the divided learning input image 20S and the divided annotation image 21S. On the other hand, in a case where the rare class is not specified by the specifying unit 51, the generation unit 52 generates the mini-batch data 11 without the above-mentioned restriction. The generation unit 52 outputs the generated mini-batch data 11 to the learning unit 53 and the evaluation unit 54.

Here, the second area ratio is an area ratio of the rare class in a first set of the mini-batch data 11. Further, designating the method of selecting the divided learning input image 20S and the divided annotation image 21S in a case where the rare class is specified by the specifying unit 51 is, for example, preferentially selecting the divided learning input image 20S and the divided annotation image 21S in which an object as the rare class appears relatively large. The generation unit 52 may execute a method of increasing selection alternatives of the divided learning input images 20S and the divided annotation images 21S such that the second area ratio of the rare class of the mini-batch data 11 is set to be higher than the second setting value. Specifically, the generation unit 52 obtains additional images by performing image processing such as trimming, vertical inversion, or rotation on the divided learning input images 20S and the divided annotation images 21S in which an object as the rare class appears relatively large, and sets the obtained images as new selection alternatives for the mini-batch data 11. The method is called data augmentation.

The learning unit 53 learns the model 10 by inputting, to the model 10, the divided learning input image group 12 of the mini-batch data 11 generated from the generation unit 52. Thereby, the learning unit 53 outputs, to the evaluation unit 54, the learning output image group 14 which is output from the model 10.

The evaluation unit 54 evaluates the class determination accuracy of the model 10 by comparing the divided annotation image group 13 of the mini-batch data 11 generated from the generation unit 52 with the learning output image group 14 output from the learning unit 53. The evaluation unit 54 outputs an evaluation result to the update unit 55.

The evaluation unit 54 evaluates the class determination **accuracy of the** model 10 by using a loss function. The loss function is a function representing a degree of a difference between the divided annotation image group 13 and the learning output image group 14. As a value calculated by the loss function is closer to 0, the class determination accuracy of the model 10 is higher.

The update unit 55 updates the model 10 according to the evaluation result from the evaluation unit 54. More specifically, the update unit 55 changes various parameter values of the model 10, by a stochastic gradient descent method or the like using a learning coefficient. The learning coefficient indicates a change range in various parameter values of the model 10. That is, as the learning coefficient has a relatively large value, the change range in various parameter values becomes wider, and thus, an update level of the model 10 becomes higher.

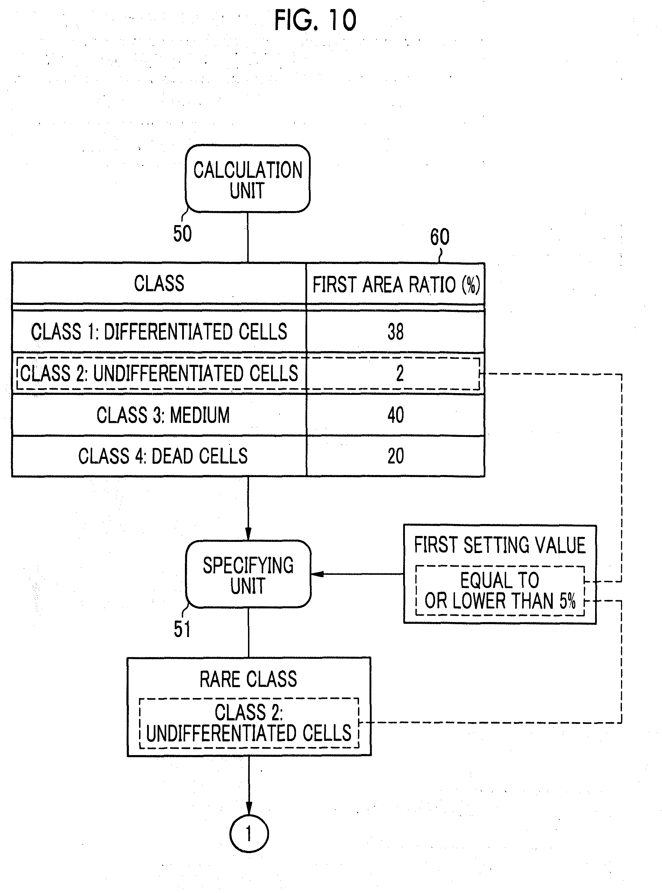

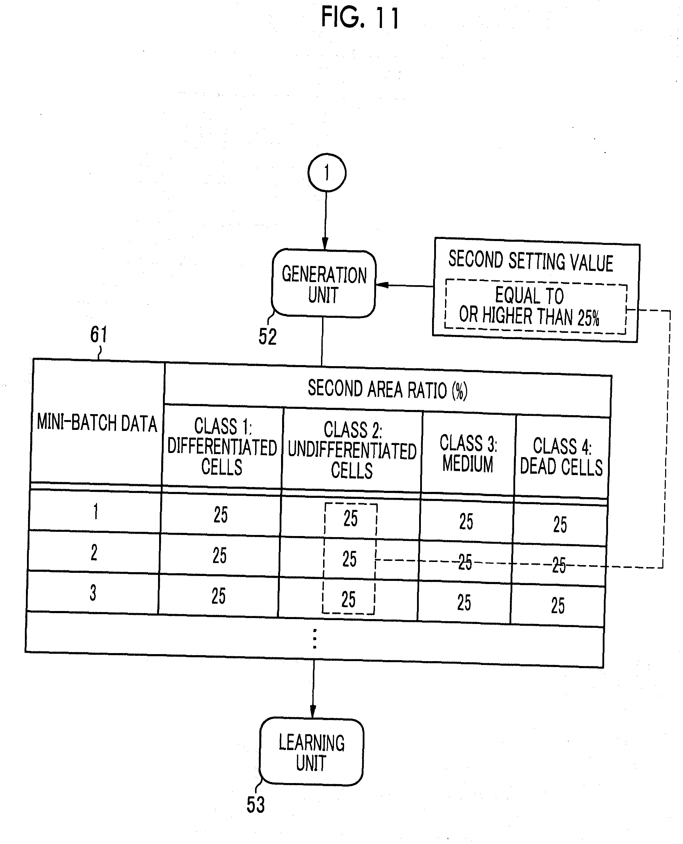

Figs. 10 and 11 illustrate specific examples of processing of each unit of the calculation unit 50, the specifying unit 51, and the generation unit 52 (correction processing unit 56). First, in Fig. 10, as shown in a table 60, the calculation unit 50 calculates the first area ratio of each class. In Fig. 10, a case where the first area ratio of the class-1 differentiated cells is calculated as 38%, the first area ratio of the class-2 undifferentiated cells is calculated as 2%, the first area ratio of the class-3 medium is calculated as 40%, and the first area ratio of the class-4 dead cells is calculated as 20% is exemplified.

The specifying unit 51 specifies a rare class of which the first area ratio is lower than a first setting value. In Fig. 10, assuming that the first setting value is equal to or lower than 5%, a case where the class-2 undifferentiated cells of which the first area ratio is 2% lower than the first setting value are specified as a rare class is exemplified. In Fig. 10, a case where only one rare class is specified is exemplified. On the other hand, in a case where there are a plurality of classes of which the first area ratio is lower than the first setting value, naturally, the plurality of classes are specified as rare classes.

Subsequently, in Fig. 11, as shown in a table 61, the generation unit 52 generates the mini-batch data 11 in which the second area ratio of the rare class is equal to or higher than the second setting value higher than the first area ratio calculated by the calculation unit 50. In Fig. 11, since the second setting value is equal to or higher than 25%, in each of the mini-batch data 11, the second area ratio of the class-2 undifferentiated cells as a rare class is set to 25%. Further, the second area ratios of other classes other than the class-2 undifferentiated cells as a rare class are uniformly set to 25%. The first setting value illustrated in Fig. 10 and the second setting value illustrated in Fig. 11 are merely examples. The second setting value may be higher than at least the first area ratio of the rare class, and may be higher than 2% in the above example. Further, since there is no particular restriction on the second area ratios of other classes other than the rare class, it is not necessary to uniformly set values of the second area ratios to 25% as described above.

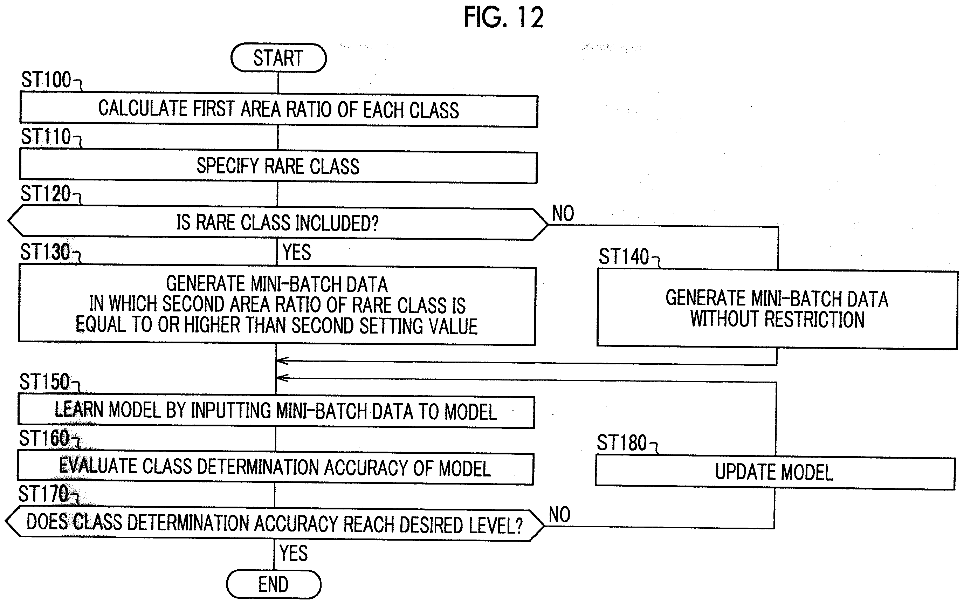

Next, an operation according to the configuration will be described with reference to a flowchart illustrated in Fig. 12. First, in a case where the operation program 40 is started, as illustrated in Fig. 9, the CPU 32 of the computer including the mini-batch learning apparatus 2 functions as each of the processing units 50 to 55.

As shown in the table 60 of Fig. 10, the calculation unit 50 calculates the first area ratio of each class (step ST100, calculation step). Subsequently, as illustrated in Fig. 10, a rare class of which the first area ratio is lower than the first setting value is specified by the specifying unit 51 (step ST110, specifying step).

In a case where a rare class is specified by the specifying unit 51 (YES in step ST120), as shown in the table 61 of Fig. 11, the mini-batch data 11 in which the second area ratio of the rare class is equal to or higher than the second setting value is generated by the generation unit 52 (step ST130, generation step).

The case where the rare class is specified by the specifying unit 51 is a case where there is a class bias in the learning input image 20 and the annotation image 21. In a state where there is a class bias in the learning input image 20 and the annotation image 21, in a case where the mini-batch data 11 is generated without any restriction, it is likely that there is also a class bias in the mini-batch data 11. As a result, a model 10 with a low rare class determination accuracy is obtained.

On the other hand, in the present embodiment, as described above, in a case where the rare class is specified by the specifying unit 51, the mini-batch data 11 in which the second area ratio of the rare class is equal to or higher than the second setting value is generated by the generation unit 52. According to the embodiment, even in a case where there is a class bias in the learning input image 20 and the annotation image 21, there is no class bias in the mini-batch data 11. Therefore, it is possible to avoid a situation in which the model 10 having a low rare class determination accuracy is obtained, and it is possible to prevent a decrease in the class determination accuracy of the model 10.

On the other hand, in a case where the rare class is not specified by the specifying unit 51, the mini-batch data 11 without a particular restriction is generated by the generation unit 52 (step ST140, generation step).

The model 10 is learned by the learning unit 53 by inputting, to the model 10, the divided learning input image group 12 of the mini-batch data 11 generated from the generation unit 52 (step ST150). Thereby, the class determination accuracy of the model 10 is evaluated by the evaluation unit 54 by comparing the learning output image group 14 output from the model 10 with the divided annotation image group 13 of the mini-batch data 11 from the generation unit 52 (step ST160).

In a case where it is determined that the class determination accuracy of the model 10 reaches a desired level based on the evaluation result by the evaluation unit 54 (YES in step ST170), the mini-batch learning is ended. On the other hand, in a case where it is determined that the class determination accuracy of the model 10 does not reach a desired leveL(NO in step ST170), the update unit 55 updates the model 10 (step ST180). The process returns to step ST150, another set of the mini-batch data 11 is input to the model 10, and the subsequent steps are repeated.

### [Second Embodiment]

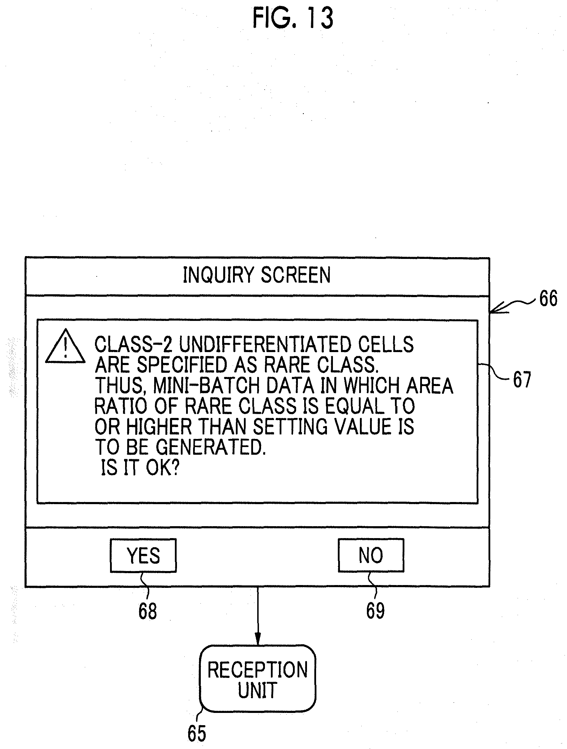

In a second embodiment illustrated in Fig. 13, whether or not to cause the generation unit 52 to perform processing of generating the mini-batch data 11 in which the second area ratio is equal to or higher than the second setting value is inquired.

In Fig. 13, the CPU of the mini-batch learning apparatus according to the second embodiment functions as a reception unit 65 in addition to each of the processing units 50 to 55 according to the first embodiment. In a case where the rare class is specified by the specifying unit 52, the reception unit 65 receives a selection instruction as to whether or not to cause the generation unit 52 to perform processing of generating the mini-batch data 11 in which the second area ratio is equal to or higher than the second setting value.

In the second embodiment, in a case where the rare class is specified by the specifying unit 52, an inquiry screen 66 is displayed on the display 34. On the inquiry screen 66, a message 67 indicating that the rare class is specified and inquiring whether or not to generate the mini-batch data 11 in which the second area ratio is equal to or higher than the second setting value, a Yes button 68, and a No button 69 are displayed. The reception unit 65 receives a selection instruction of the Yes button 68 and the No button 69, as a selection instruction as to whether or not to cause the generation unit 52 to perform processing of generating the mini-batch data 11 in which the second area ratio is equal to or higher than the second setting value. In a case where the Yes button 68 is selected, processing of generating the mini-batch data 11 in which the second area ratio is equal to or higher than the second setting value is performed by the generation unit 52. On the other hand, in a case where the No button 69 is selected, processing of generating the mini-batch data 11 in which the second area ratio is equal to or higher than the second setting value is not performed by the generation unit 52.

In generation of the annotation image, since the class is manually designated, the class may be incorrectly designated. Further, although classes are designated in early stage of development of the model 10, some classes may become less important as the development progresses. In such a case, even though the rare class is specified by the specifying unit 52, it may not be necessary to generate the mini-batch data 11 in which the second area ratio is equal to or higher than the second setting value.

For this reason, in the second embodiment, the reception unit 65 receives a selection instruction as to whether or not to cause the generation unit 52 to perform processing of generating the mini-batch data 11 in which the second area ratio is equal to or higher than the second setting value. Therefore, in a case where the rare class is specified by the specifying unit 52 but it may not be necessary to generate the mini-batch data 11 in which the second area ratio is equal to or higher than the second setting value, it is possible to deal with the case.

### [Third Embodiment]

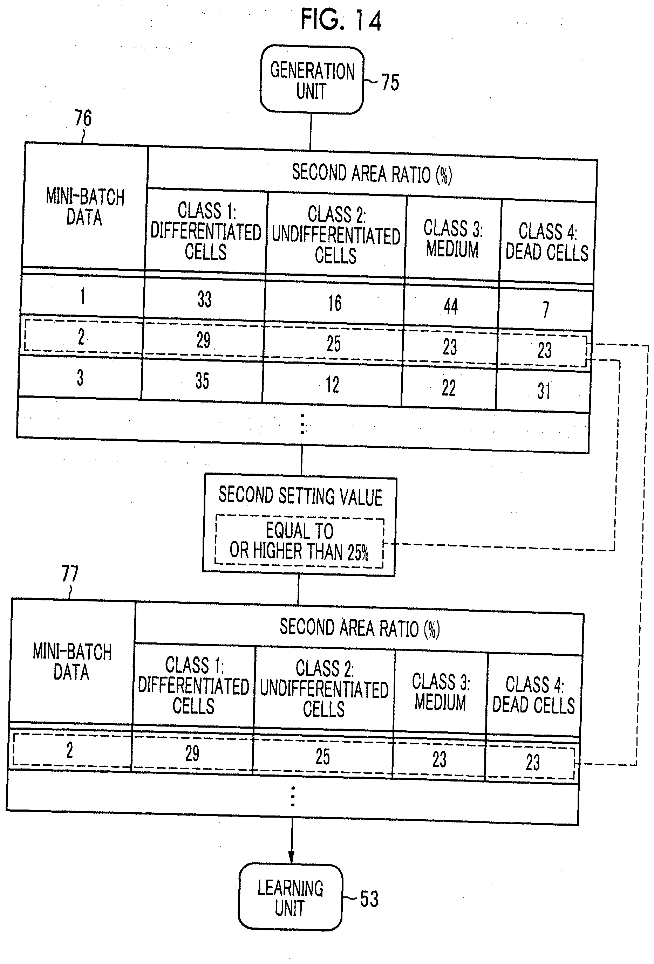

In a third embodiment illustrated in Fig. 14, a plurality of pieces of the mini-batch data 11 are generated according to a certain rule. Among the plurality of pieces of the mini-batch data 11 generated according to the certain rule, the mini-batch data 11 in which the second area ratio is equal to or higher than the second setting value is selected for use in learning.

In Fig. 14, the generation unit 75 according to the third embodiment generates the divided learning input images 20S and the divided annotation images 21S by moving the frame 25 according to the certain rule (moving sequentially the frame by DX in the horizontal direction and DY in the vertical direction) as illustrated in Figs. 4 and 5. Further, the generation unit 75 generates the divided learning input image group 12 and the divided annotation image group 13 according to a certain rule, from the divided learning input images 20S and the divided annotation image 21S. In the first embodiment, the mini-batch data 11 in which the second area ratio is equal to or higher than the second setting value is generated by designating the method of selecting the divided learning input image 20S and the divided annotation image 21S. On the other hand, in the third embodiment, the mini-batch data 11 is generated according to a certain rule at once without designation of the selection method.

The generation unit 75 selects, among the plurality of pieces of the mini-batch data 11 generated according to the certain rule, the mini-batch data 11 in which the second area ratio is equal to or higher than the second setting value, for use in learning.

A table 76 shows the second area ratio of each class of the plurality of pieces of the mini-batch data 11 generated by the generation unit 75 according to the certain rule. In the table 76, as in Fig. 10 and the like, a case where the class-2 undifferentiated cells are specified as a rare class is exemplified. Further, a case where the second setting value is equal to or higher than 25% as in the first embodiment is exemplified. In this case, the mini-batch data in which the second area ratio of the class-2 undifferentiated cells as a rare class is equal to or higher than the second setting value is the mini-batch data 11 of No. 2. Thus, as shown in a table 77, the generation unit 75 selects the mini-batch data 11 of No. 2, as the mini-batch data 11 which is to be input to the learning unit 53.

As described above, in the third embodiment, the generation unit 75 generates the plurality of pieces of the mini-batch data 11 according to the certain rule, and selects, among the plurality of pieces of the mini-batch data 11 generated according to the certain rule, the mini-batch data 11 in which the second area ratio is equal to or higher than the second setting value, for use in learning. Therefore, it is possible to save time and effort for generating the mini-batch data 11 in which the second area ratio is equal to or higher than the second setting value by designating the method of selecting the divided learning input image 20S and the divided annotation image 21S.

### [Fourth Embodiment]

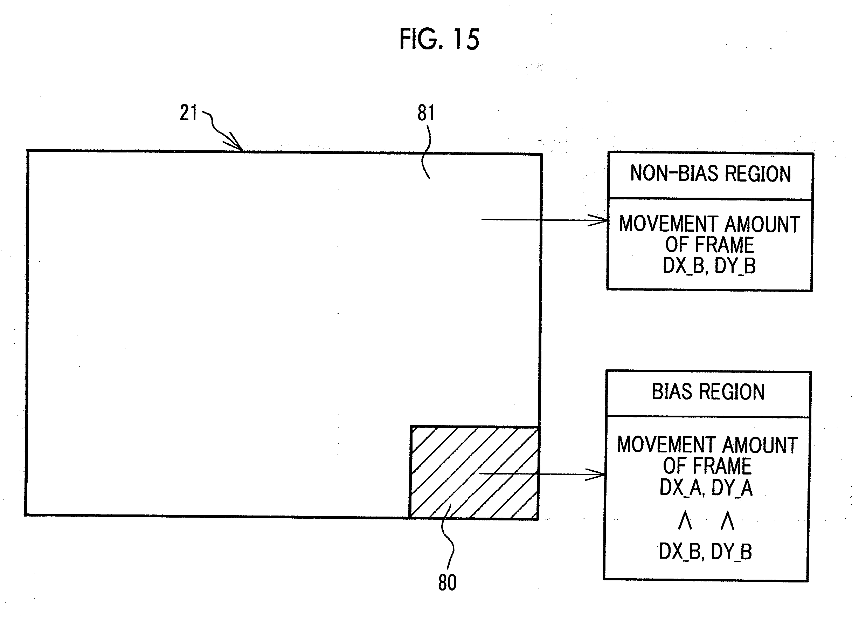

In a fourth embodiment illustrated in Fig. 15, a bias region and a non-bias region of the rare class in the annotation image 21 are detected. The number of cut-outs of an image which is a source of the mini-batch data 11 in the bias region is set to be larger than the number of cut-outs of the image in the non-bias region. Here, the image which is a source of the mini-batch data 11 is the divided annotation image 21S.

In Fig. 15, the generation unit according to the fourth embodiment detects a bias region 80 and a non-bias region 81 of the rare class in the annotation image 21. In a method for detecting the bias region 80, first, the annotation image 21 is divided into a plurality of regions, and the area ratio of the rare class in each region is calculated. Subsequently, an average AVE and a standard deviation σ of the calculated area ratio of each region are obtained. A region in which the area ratio of the rare class exceeds, for example, AVE+3σ is detected as the bias region 80.

The generation unit sets the number of cut-outs of the divided annotation image 21S in the bias region 80 detected as described above to be larger than the number of cut-outs of the divided annotation image 21S in the non-bias region 81. In Fig. 15, in the movement amount of the frame 25 illustrated in Figs. 4 and 5, the movement amounts DX_A and DY_A in the bias region 80 are set to be smaller than the movement amounts DX_B and DY_B in the non-bias region 81. Thus, the number of cut-outs of the divided annotation image 21S in the bias region 80 is set to be larger than the number of cut-outs of the divided annotation image 21S in the non-bias region 81.

As described above, in the fourth embodiment, the generation unit detects the bias region 80 and the non-bias region 81 of the rare class in the annotation image 21, and sets the number of cut-outs of the image which is a source of the mini-batch data 11 in the bias region 80 to be larger than the number of cut-outs of the image in the non-bias region 81. Therefore, it is possible to easily generate the mini-batch data 11 in which the second area ratio is equal to or higher than the second setting value.

In each embodiment, images obtained by capturing a state of cell culture by a phase contrast microscope are exemplified as the input image 16 and the learning input image 20, and the differentiated cells, the medium, and the like are exemplified as the classes. On the other hand, the present disclosure is not limited thereto. For example, magnetic resonance imaging (MRI) images may be used as the input image 16 and the learning input image 20, and organs such as a liver and a kidney may be used as the classes.

The model 10 is not limited to U-Net, and may be another convolutional neural network, for example, SegNet.

The hardware configuration of the computer including the mini-batch learning apparatus 2 may be modified in various ways. For example, the mini-batch learning apparatus 2 may be configured by a plurality of computers which are separated as hardware for the purpose of improving processing capability and reliability. Specifically, the functions of the calculation unit 50 and the specifying unit 51, the functions of the generation unit 52 and the learning unit 53, and the functions of the evaluation unit 54 and the update unit 55 may be distributed to three computers. In this case, the mini-batch learning apparatus 2 is configured with three computers.

In this way, the hardware configuration of the computer may be appropriately changed according to the required performance such as processing capability, safety, and reliability. Further, not only hardware but also the application program such as an operation program 40 may be duplicated or distributed and stored in a plurality of storage devices for the purpose of ensuring safety and reliability.

In each embodiment, for example, as a hardware structure of the processing unit that executes various processing such as pieces of processing by the calculation unit 50, the specifying unit 51, the generation unit 52 or 75, the learning unit 53, the evaluation unit 54, the update unit 55, and the reception unit 65, the following various processors may be used. The various processors include, as described above, the CPU 32 which is a general-purpose processor that functions as various processing units by executing software (an operation program 40), a programmable logic device (PLD) such as a field programmable gate array (FPGA) which is a processor capable of changing a circuit configuration after manufacture, a dedicated electric circuit such as an application specific integrated circuit (ASIC) which is a processor having a circuit configuration specifically designed to execute specific processing, and the like.

One processing unit may be configured by one of these various processors, or may be configured by a combination of two or more processors having the same type or different types (for example, a combination of a plurality of FPGAs and/or a combination of a CPU and an FPGA). Further, the plurality of processing units may be configured by one processor.

As an example in which the plurality of processing units are configured by one processor, firstly, as represented by a computer such as a client and a server, a form in which one processor is configured by a combination of one or more CPUs and software and the processor functions as the plurality of processing units may be adopted. Secondly, as represented by a system on chip (SoC) or the like, a form in which a processor that realizes the function of the entire system including the plurality of processing units by one integrated circuit (IC) chip is used may be adopted. As described above, the various processing units are configured by using one or more various processors as a hardware structure.

Further, as the hardware structure of the various processors, more specifically, an electric circuit (circuitry) in which circuit elements such as semiconductor elements are combined may be used.

From the above description, the invention described in following Appendix 1 can be understood.

### [Appendix 1]

A mini-batch learning apparatus that learns a machine learning model for performing semantic segmentation, which determines a plurality of classes in an image in units of pixels, by inputting mini-batch data to the machine learning model, the apparatus including:
a calculation processor configured to calculate, from a learning input image and an annotation image which are sources of the mini-batch data, a first area ratio of each of the plurality of classes with respect to an entire area of the annotation image;
a specifying processor configured to specify a rare class of which the first area ratio is lower than a first setting value; and
a generation processor configured to generate the mini-batch data from the learning input image and the annotation image, the mini-batch data being mini-batch data in which a second area ratio of the rare class is equal to or higher than a second setting value higher than the first area ratio calculated by the calculation processor.

The technique of the present disclosure can also appropriately combine the various embodiments and the various modification examples. In addition, the technique of the present disclosure is not limited to each embodiment, and various configurations may be adopted without departing from the scope of the present disclosure. Further, the technique of the present disclosure extends to a program and a storage medium for non-temporarily storing the program.

The described contents and the illustrated contents are detailed explanations of a part according to the technique of the present disclosure, and are merely examples of the technique of the present disclosure. For example, the descriptions related to the configuration, the function, the operation, and the effect are descriptions related to examples of a configuration, a function, an operation, and an effect of a part according to the technique of the present disclosure. Therefore, it goes without saying that, in the described contents and illustrated contents, unnecessary parts may be deleted, new components may be added, or replacements may be made without departing from the spirit of the technique of the present disclosure. Further, in order to avoid complications and facilitate understanding of the part according to the technique of the present disclosure, in the described contents and illustrated contents, descriptions of technical knowledge and the like that do not require particular explanations to enable implementation of the technique of the present disclosure are omitted.

In this specification, "A and/or B" is synonymous with "at least one of A or B". That is, "A and/or B" means that only A may be included, that only B may be included, or that a combination of A and B may be included. Further, in this specification, even in a case where three or more matters are expressed by being connected using "and/or", the same concept as "A and/or B" is applied.

All documents, patent applications, and technical standards mentioned in this specification are incorporated herein by reference to the same extent as in a case where each document, each patent application, and each technical standard are specifically and individually described by being incorporated by reference.

## Claims

1. A mini-batch learning apparatus that learns a machine learning model for performing semantic segmentation, which determines a plurality of classes in an image in units of pixels, by inputting mini-batch data to the machine learning model, the apparatus comprising:
a calculation unit that calculates, from a learning input image and an annotation image which are sources of the mini-batch data, a first area ratio of each of the plurality of classes with respect to an entire area of the annotation image;
a specifying unit that specifies a rare class of which the first area ratio is lower than a first setting value; and
a generation unit that generates the mini-batch data from the learning input image and the annotation image, the mini-batch data being mini-batch data in which a second area ratio of the rare class is equal to or higher than a second setting value higher than the first area ratio calculated by the calculation unit.

2. The mini-batch learning apparatus according to claim 1, further comprising:
a reception unit that receives a selection instruction as to whether or not to cause the generation unit to perform processing of generating the mini-batch data in which the second area ratio is equal to or higher than the second setting value.

3. The mini-batch learning apparatus according to claim 1 or 2,
wherein the generation unit generates a plurality of pieces of the mini-batch data according to a certain rule, and selects, among the plurality of pieces of the mini-batch data generated according to the certain rule, the mini-batch data in which the second area ratio is equal to or higher than the second setting value, for use in the learning.

4. The mini-batch learning apparatus according to any one of claims 1 to 3,
wherein the generation unit detects a bias region and a non-bias region of the rare class in the annotation image, and sets the number of cut-outs of an image which is a source of the mini-batch data in the bias region to be larger than the number of cut-outs of the image in the non-bias region.

5. A computer-readable storage medium storing an operation program of a mini-batch learning apparatus that learns a machine learning model for performing semantic segmentation, which determines a plurality of classes in an image in units of pixels, by inputting mini-batch data to the machine learning model, the program causing a computer to function as:
a calculation unit that calculates, from a learning input image and an annotation image which are sources of the mini-batch data, a first area ratio of each of the plurality of classes with respect to an entire area of the annotation image;
a specifying unit that specifies a rare class of which the first area ratio is lower than a first setting value; and
a generation unit that generates the mini-batch data from the learning input image and the annotation image, the mini-batch data being mini-batch data in which a second area ratio of the rare class is equal to or higher than a second setting value higher than the first area ratio calculated by the calculation unit.

6. An operation method of a mini-batch learning apparatus that learns a machine learning model for performing semantic segmentation, which determines a plurality of classes in an image in units of pixels, by inputting mini-batch data to the machine learning model, the method comprising:
a calculation step of calculating, from a learning input image and an annotation image which are sources of the mini-batch data, a first area ratio of each of the plurality of classes with respect to an entire area of the annotation image;
a specifying step of specifying a rare class of which the first area ratio is lower than a first setting value; and
a generation step of generating the mini-batch data from the learning input image and the annotation image, the mini-batch data being mini-batch data in which a second area ratio of the rare class is equal to or higher than a second setting value higher than the first area ratio calculated in the calculation step.
